(19) Europäisches Patentamt
European Patent Office
Office européen des brevets

(11) **EP 4 750 124 A1**

(12) **EUROPEAN PATENT APPLICATION**
published in accordance with Art. 153(4) EPC

(43) Date of publication:
**27.05.2026 Bulletin 2026/22**

(21) Application number: **24850610.7**

(22) Date of filing: **10.05.2024**

(51) International Patent Classification (IPC):
**H04W 24/02** (2009.01)

(52) Cooperative Patent Classification (CPC):
**H04L 5/00; H04W 24/02; H04W 24/10; H04W 28/06**

(86) International application number:
**PCT/CN2024/092350**

(87) International publication number:
**WO 2025/030956 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311010524**

(71) Applicant: **HUAWEI TECHNOLOGIES CO., LTD.**
**Shenzhen 518129 (CN)**

(72) Inventors:
• **CHEN, Liangyu**
**Shenzhen, Guangdong 518129 (CN)**
• **XUAN, Yidi**
**Shenzhen, Guangdong 518129 (CN)**
• **GUAN, Lei**
**Shenzhen, Guangdong 518129 (CN)**
• **LI, Ruijie**
**Shenzhen, Guangdong 518129 (CN)**
• **WANG, Yi**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)     A communication method and apparatus are provided, relating to the field of wireless communication, to reduce reporting overheads of a plurality of CSI reports in a scenario in which a terminal device reports the plurality of CSI reports. The method includes: The terminal device receives a CSI report configuration, where the CSI report configuration includes N CSI report sub-configurations, each CSI report sub-configuration indicates one or more CSI-RS resources, and the N CSI report sub-configurations indicate M CSI-RS resources. The terminal device receives a CSI-RS on one or more of the M CSI-RS resources, and obtains, based on the CSI-RS, N CSI reports respectively corresponding to the N CSI report sub-configurations. The terminal device reports K CSI reports in the N CSI reports. N, M, and K are all integers greater than 1, and K is less than or equal to N.

FIG. 2

## Description

### CROSS-REFERENCE TO RELATED APPLICATIONS

This application claims priority to Chinese Patent Application No. 202311010524.4, filed with the China National Intellectual Property Administration on August 10, 2023 and entitled "COMMUNICATION METHOD AND APPARATUS", which is incorporated herein by reference in its entirety.

### TECHNICAL FIELD

Embodiments of this application relate to the field of wireless communication, and in particular, to a communication method and apparatus.

### BACKGROUND

In a communication process, a network device sends a channel state information reference signal (channel state information reference signal, CSI-RS) to a terminal device, to obtain a channel state information (channel state information, CSI) report, and then schedules, based on the obtained CSI report, the terminal device to send and receive data.

With development of communication technologies, a spectrum used by a communication apparatus is increasingly wide, a quantity of transmit antennas configured by the network device is increasingly large, and overall power consumption of the network device is increasingly high. To reduce the power consumption of the network device, the network device may dynamically shut down all or a part of the transmit antennas. However, in this implementation, because the transmit antenna of the network device dynamically changes, a channel status may also dynamically change. In this case, the terminal device needs to report a plurality of CSI reports. Consequently, reporting overheads of the CSI reports are high, and system transmission performance deteriorates.

How to reduce the reporting overheads of the plurality of CSI reports is a technical problem to be urgently resolved currently.

### SUMMARY

This application provides a communication method and apparatus, to reduce reporting overheads of a plurality of CSI reports.

According to a first aspect, this application provides a communication method. The communication method may be performed by a terminal device or a module, for example, a chip, in the terminal device. For ease of description, an example in which the method is performed by the terminal device is used for description below.

The method includes: The terminal device receives a CSI report configuration, where the CSI report configuration includes N CSI report sub-configurations (CSI report sub-configuration), each CSI report sub-configuration indicates one or more CSI-RS resources, and the N CSI report sub-configurations indicate M CSI-RS resources. The terminal device receives a CSI-RS on one or more of the M CSI-RS resources, and obtains, based on the CSI-RS, N CSI reports respectively corresponding to the N CSI report sub-configurations. The terminal device reports K CSI reports in the N CSI reports. N, M, and K are all integers greater than 1, and K is less than or equal to N.

For example, the terminal device receives the CSI report configuration from a network device, and sends the K CSI reports to the network device.

In the foregoing technical solution, the terminal device may receive the CSI-RS based on the CSI-RS resources indicated by the N CSI report sub-configurations, to obtain the N CSI reports respectively corresponding to the N CSI report sub-configurations. When the terminal device reports the K CSI reports in the N CSI reports, reporting overheads of the CSI reports may be reduced in a manner of reporting a part of the CSI reports (that is, K is less than N), or a quantity of bits occupied by one or more of the K CSI reports may be reduced, to reduce the reporting overheads of the CSI reports.

In a possible implementation, the K CSI reports include a first CSI report, the first CSI report is determined based on a first CSI report sub-configuration in the N CSI report sub-configurations, the first CSI report sub-configuration indicates M1 CSI-RS resources, and M1 is an integer greater than 1. The first CSI report includes a CSI-RS resource indicator (CSI-RS resource indicator, CRI), and a quantity of bits of the CRI is determined based on the M1 CSI-RS resources. In a possible implementation, the quantity of bits of the CRI in the first CSI report is determined based on $log_2 M1$. For example, the quantity of bits of the CRI in the first CSI report is equal to

$$\lceil log_2 M1 \rceil$$

.

In the foregoing technical solution, the K CSI reports include the first CSI report, the first CSI report carries the CRI, and the quantity of bits occupied by the CRI is determined by the terminal device based on a quantity of CSI-RS resources indicated by the first CSI report sub-configuration. In comparison with a solution in which the terminal device determines, based on a quantity of CSI-RS resources indicated by a CSI report configuration, a quantity of bits occupied by a CRI, in this technical solution, the quantity of bits occupied by the CRI can be greatly reduced, in other words, a quantity of bits occupied by the first CSI report can be greatly reduced. This helps reduce overheads of reporting the K CSI reports by the terminal device.

In a possible implementation, the K CSI reports are respectively generated based on K CSI report sub-configurations in the N CSI report sub-configurations, and a quantity of bits of a CRI in each CSI report is determined based on a quantity of CSI-RS resources indicated by a CSI report sub-configuration for generating the CSI report.

In the foregoing technical solution, each of the K CSI reports sent by the terminal device to the network device carries a CRI, and the quantity of bits occupied by the CRI carried in each CSI report is determined by the terminal device based on the quantity of CSI-RS resources indicated by the CSI report sub-configuration for generating the CSI report. In comparison with a solution in which the terminal device determines, based on a quantity of CSI-RS resources indicated by a CSI report configuration, a quantity of bits occupied by a CRI, in this technical solution, the quantity of bits occupied by the CRI can be greatly reduced, in other words, a quantity of bits occupied by each of the K CSI reports is greatly reduced. This helps reduce overheads of reporting the K CSI reports by the terminal device.

In a possible implementation, when reporting the K CSI reports in the N CSI reports, the terminal device may specifically sort the N CSI reports in descending order based on priorities of the N CSI reports, to select first K CSI reports in the sorting, report the K CSI reports, and discard a CSI report other than the K CSI reports.

In the foregoing technical solution, the terminal device selects the K CSI reports (that is, a part of the CSI reports) from the N CSI reports for reporting, and does not need to report all of the CSI reports. This helps reduce overheads of reporting the CSI reports by the terminal device.

In a possible implementation, the N CSI reports include the first CSI report and a second CSI report, the first CSI report includes first information, the second CSI report does not include the first information, and a priority of the first CSI report is higher than a priority of the second CSI report; and the first information includes the CRI, or the first information includes the CRI and a precoding matrix indicator (precoding matrix indicator, PMI).

In the foregoing technical solution, the terminal device determines that a priority of a CSI report including the first information is higher than a priority of a CSI report not including the first information, in other words, the terminal device preferentially reports the CSI report including the first information. In this way, the network device can obtain the first information, and perform scheduling or beam management based on N CSI-RS resources indicated by the first information.

In a possible implementation, the N CSI reports include the first CSI report and a second CSI report, the first CSI report corresponds to the first CSI report sub-configuration in the N CSI report sub-configurations, and the second CSI report corresponds to a second CSI report sub-configuration in the N CSI report sub-configurations. When an index of the first CSI report sub-configuration is less than an index of the second CSI report sub-configuration, a priority of the first CSI report is higher than a priority of the second CSI report. For example, a quantity of ports corresponding to a CSI-RS resource indicated by the first CSI report sub-configuration is greater than or equal to a quantity of ports corresponding to a CSI-RS resource indicated by the second CSI report sub-configuration.

In the foregoing technical solution, it is considered that a quantity of ports corresponding to a CSI-RS resource indicated by a CSI report sub-configuration with a low index is greater than or equal to a quantity of ports corresponding to a CSI-RS resource indicated by a CSI report sub-configuration with a high index, and a larger quantity of ports corresponding to a CSI-RS resource indicates a larger quantity of physical antennas for data transmission, in other words, better communication performance. In this way, the terminal device can preferentially report a CSI report corresponding to the CSI report sub-configuration with a low index. This helps the network device perform better scheduling or beam management.

In a possible implementation, the N CSI reports include the first CSI report and a second CSI report, the first CSI report corresponds to the first CSI report sub-configuration in the N CSI report sub-configurations, and the second CSI report corresponds to a second CSI report sub-configuration in the N CSI report sub-configurations. When a quantity of ports corresponding to a CSI-RS resource indicated by the first CSI report sub-configuration is greater than a quantity of ports corresponding to a CSI-RS resource indicated by the second CSI report sub-configuration, a priority of the first CSI report is higher than a priority of the second CSI report.

In the foregoing technical solution, a larger quantity of ports corresponding to a CSI-RS resource indicates a larger quantity of physical antennas for data transmission, in other words, better communication performance. The terminal device may preferentially report a CSI report corresponding to a CSI report sub-configuration indicating a CSI-RS resource corresponding to a larger quantity of ports. This helps the network device perform better scheduling or beam management.

In a possible implementation, the N CSI reports include the first CSI report, the first CSI report is a CSI report in the N CSI reports that includes first information, and the first information includes the CRI, or the first information includes the CRI and a PMI. When reporting the K CSI reports in the N CSI reports, the terminal device may specifically report the first CSI report, and discard a CSI report other than the first CSI report in the N CSI reports, that is, K=1.

In the foregoing technical solution, the terminal device may directly report a CSI report including the first information without performing priority sorting on the N CSI reports, and discard a CSI report not including the first information. This ensures that the network device can obtain the first information, and a computing amount of the terminal device is further reduced.

In a possible implementation, before reporting the K CSI reports in the N CSI reports, the terminal device further determines that an uplink resource does not meet a resource requirement for reporting the N CSI reports by the terminal device. The uplink resource herein is an uplink resource for sending a CSI report. Specifically, the terminal device may determine, based on a quantity of bits that can be carried in the uplink resource and a sum of quantities of bits of the N CSI reports, a target code rate for sending the N CSI reports; and when the target code rate for the N CSI reports is greater than a maximum code rate, report the K CSI reports in the N CSI reports, where a target code rate for the K CSI reports is less than or equal to the maximum code rate.

In the foregoing technical solution, when determining that the uplink resource does not meet the resource requirement for reporting the N CSI reports by the terminal device, the terminal device may select a part of CSI reports from the N CSI reports for reporting.

In a possible implementation, the K CSI reports include CRIs, the CRIs indicate N CSI-RS resources, and the N CSI-RS resources are respectively indicated by the N CSI report sub-configurations.

In the foregoing technical solution, the network device may determine the N CSI-RS resources based on the CRIs included in the K CSI reports, to perform better scheduling or beam management.

According to a second aspect, this application provides a communication method. The communication method may be performed by a network device or a module, for example, a chip, in the network device. For ease of description, an example in which the method is performed by the network device is used for description below.

The method includes: The network device sends a CSI report configuration, where the CSI report configuration includes N CSI report sub-configurations, each CSI report sub-configuration indicates one or more CSI-RS resources, and the N CSI report sub-configurations indicate M CSI-RS resources. The network device sends a CSI-RS on the M CSI-RS resources. The network device receives K CSI reports, where the K CSI reports belong to N CSI reports, and the N CSI reports are respectively determined based on the N CSI report sub-configurations. N, M, and K are all integers greater than 1, and K is less than or equal to N. In a possible implementation, the network device sends the CSI report configuration to a terminal device, and receives the K CSI reports from the terminal device.

In a possible implementation, the K CSI reports include a first CSI report, the first CSI report is determined based on a first CSI report sub-configuration in the N CSI report sub-configurations, the first CSI report sub-configuration indicates M1 CSI-RS resources, and M1 is an integer greater than 1. The first CSI report includes a CRI, and a quantity of bits of the CRI is determined based on the M1 CSI-RS resources. For example, the quantity of bits of the CRI is determined based on $log_2$ M1.

In a possible implementation, the K CSI reports are respectively generated based on K CSI report sub-configurations in the N CSI report sub-configurations, and a quantity of bits of a CRI in each CSI report is determined based on a quantity of CSI-RS resources indicated by a CSI report sub-configuration for generating the CSI report.

In a possible implementation, the N CSI reports include the first CSI report and a second CSI report, the first CSI report includes first information, the second CSI report does not include the first information, and a priority of the first CSI report is higher than a priority of the second CSI report; and the first information includes the CRI, or the first information includes the CRI and a PMI.

In a possible implementation, the N CSI reports include the first CSI report and a second CSI report, the first CSI report corresponds to the first CSI report sub-configuration in the N CSI report sub-configurations, and the second CSI report corresponds to a second CSI report sub-configuration in the N CSI report sub-configurations. When an index of the first CSI report sub-configuration is less than an index of the second CSI report sub-configuration, a priority of the first CSI report is higher than a priority of the second CSI report. In a possible implementation, a quantity of ports corresponding to a CSI-RS resource indicated by the first CSI report sub-configuration is greater than or equal to a quantity of ports corresponding to a CSI-RS resource indicated by the second CSI report sub-configuration.

In a possible implementation, the N CSI reports include the first CSI report and a second CSI report, the first CSI report corresponds to the first CSI report sub-configuration in the N CSI report sub-configurations, and the second CSI report corresponds to a second CSI report sub-configuration in the N CSI report sub-configurations. When a quantity of ports corresponding to a CSI-RS resource indicated by the first CSI report sub-configuration is greater than a quantity of ports corresponding to a CSI-RS resource indicated by the second CSI report sub-configuration, a priority of the first CSI report is higher than a priority of the second CSI report.

In a possible implementation, the N CSI reports include the first CSI report, the first CSI report is a CSI report in the N CSI reports that includes first information, a CSI report other than the first CSI report in the N CSI reports does not include the first information, and the first information includes the CRI, or the first information includes the CRI and a PMI. When receiving the K CSI reports, the network device may specifically receive the first CSI report, that is, K = 1.

In a possible implementation, the K CSI reports include CRIs, the CRIs indicate N CSI-RS resources, and the N CSI-RS resources are respectively indicated by the N CSI report sub-configurations.

According to a third aspect, an embodiment of this application provides a communication apparatus. The apparatus has a function of implementing the terminal device in any one of the first aspect or the possible implementations of the first aspect. The apparatus may be a terminal device, or may be a chip included in the terminal device.

Alternatively, the communication apparatus may have a function of implementing the network device in any one of the second aspect or the possible implementations of the second aspect. The apparatus may be a network device, or may be a chip included in the network device.

A function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing a corresponding function of the terminal device in any one of the first aspect or the implementations of the first aspect, or performing a corresponding function of the network device in any one of the second aspect or the implementations of the second aspect. The transceiver module is configured to support communication between the apparatus and another communication device. For example, when the apparatus is a terminal device, the apparatus may receive a CSI report configuration. The communication apparatus may further include a storage module. The storage module is coupled to the processing module, and stores program instructions and data that are necessary for the apparatus. In an example, the processing module may be a processor, a communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to cause the apparatus to perform the method in any one of the first aspect or the possible implementations of the first aspect, or perform the method in any one of the second aspect or the possible implementations of the second aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or a chip included in the terminal device, the communication interface may be an input/output interface of the chip. Optionally, the transceiver may be a transceiver circuit, and the input/output interface may be an input/output circuit.

According to a fourth aspect, an embodiment of this application provides a chip system, including a processor and a memory. The processor is coupled to the memory. The memory is configured to store a program or instructions. When the program or the instructions are executed by the processor, the chip system is caused to implement the method in any one of the first aspect or the possible implementations of the first aspect, or implement the method in any one of the second aspect or the possible implementations of the second aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be arranged on different chips respectively.

According to a fifth aspect, this application provides a computer-readable storage medium. The computer-readable storage medium stores a computer program or instructions. When the computer program or the instructions are executed by a communication apparatus, the communication apparatus is caused to perform the method in any one of the first aspect or the possible implementations of the first aspect, or the communication apparatus is caused to perform the method in any one of the second aspect or the possible implementations of the second aspect.

According to a sixth aspect, this application provides a computer program product. The computer program product includes a computer program or instructions. When the computer program or instructions are executed by a communication apparatus, the method in any one of the first aspect or the possible implementations of the first aspect is implemented, or the method in any one of the second aspect or the possible implementations of the second aspect is implemented.

According to a seventh aspect, an embodiment of this application provides a communication system. The communication system includes a network device and a terminal device. Optionally, the terminal device is configured to perform the method in any one of the first aspect or the possible implementations of the first aspect, and the network device is configured to perform the method in any one of the second aspect or the possible implementations of the second aspect.

According to an eighth aspect, this application provides a communication method. The communication method includes: A network device sends a CSI report configuration, where the CSI report configuration includes N CSI report sub-configurations, each CSI report sub-configuration indicates one or more CSI-RS resources, and the N CSI report sub-configurations indicate M CSI-RS resources. The network device sends a CSI-RS on the M CSI-RS resources. Correspondingly, a terminal device receives the CSI report configuration, and the terminal device receives the CSI-RS on one or more of the M CSI-RS resources. The terminal device obtains, based on the CSI-RS, N CSI reports respectively corresponding to the N CSI report sub-configurations, and reports K CSI reports in the N CSI reports. The network device receives the K CSI reports. N, M, and K are all integers greater than 1, and K is less than or equal to N.

For technical effects that can be achieved in any one of the second aspect to the eighth aspect, refer to the descriptions of beneficial effects in the first aspect. Details are not described herein again.

BRIEF DESCRIPTION OF DRAWINGS

FIG. 1 is a diagram of an architecture of a communication system according to this application;
FIG. 2 is a schematic flowchart of a communication method according to this application;
FIG. 3 is a diagram of a CSI report configuration according to this application;
FIG. 4 is a diagram of a UCI bit sequence according to this application;
FIG. 5 is a diagram of a plurality of CSI report configurations according to this application;
FIG. 6 is a schematic flowchart of another communication method according to this application;
FIG. 7 is a diagram of a structure of a communication apparatus according to this application; and
FIG. 8 is a diagram of a structure of another communication apparatus according to this application.

DESCRIPTION OF EMBODIMENTS

Technical solutions provided in embodiments of this application may be applied to a 5th generation (5th generation, 5G) mobile communication system, for example, a new radio (new radio, NR) system, or may be applied to a long term evolution (long term evolution, LTE) system, or may be applied to a next generation mobile communication system or another similar communication system. This is not specifically limited.

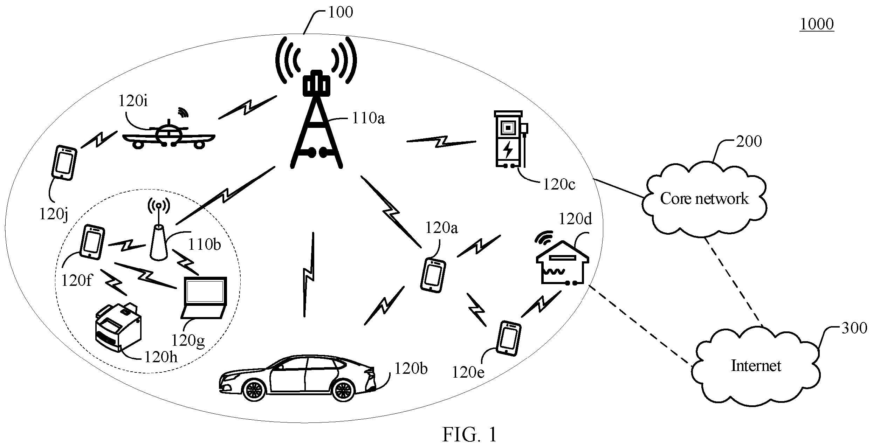

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless or wired manner. A core network device and the network device may be different physical devices that are independent of each other, a function of the core network device and a logical function of the network device may be integrated into a same physical device, or a part of functions of the core network device and a part of functions of the network device may be integrated into one physical device. Terminal devices may be connected to each other and network devices may be connected to each other in a wired or wireless manner. FIG. 1 is merely a diagram. The communication system may further include another network device, for example, may further include a relay device and a backhaul device, which are not shown in FIG. 1.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of a base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete a part or all of functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, intelligent transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The network device and the terminal device may be at fixed positions, or may be movable. The network device and the terminal device may be deployed on land, including indoor devices, outdoor devices, handheld devices, or vehicle-mounted devices; may be deployed on water; or may be deployed on an airplane, a balloon, and a man-made satellite. Application scenarios of the network device and the terminal device are not limited in embodiments of this application.

Roles of the network device and the terminal device may be relative. For example, the helicopter or uncrewed aerial vehicle 120i in FIG. 1 may be configured as a mobile base station. For the terminal device 120j that accesses the radio access network 100 via 120i, 120i is a network device. However, for the network device 110a, 120i is a terminal device. In other words, 110a and 120i communicate with each other according to a radio air interface protocol. It is clear that 110a and 120i may alternatively communicate with each other according to an interface protocol between network devices. In this case, for 110a, 120i is also a network device. Therefore, the network device and the terminal device may be collectively referred to as a communication apparatus. 110a and 110b in FIG. 1 may each be referred to as a communication apparatus with a function of the network device, and 120a to 120j in FIG. 1 may each be referred to as a communication apparatus with a function of the terminal device.

Communication may be performed between the network device and the terminal device, between network devices, or between terminal devices by using a licensed spectrum, an unlicensed spectrum, or both the licensed spectrum and the unlicensed spectrum; or may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following first explains and describes related technical features in embodiments of this application. It should be noted that these explanations are intended to make embodiments of this application easier to understand, but should not be construed as a limitation on the protection scope claimed in this application.

1. Channel state information reference signal (channel state information reference signal, CSI-RS): A network device may obtain, by sending the CSI-RS, channel state information (channel state information, CSI) fed back by a terminal device.

2. CSI-RS resource indicator (CSI-RS resource indicator, CRI): The network device sends the CSI-RS to the terminal device on a CSI-RS resource by using different beams, and the terminal device reports a CSI-RS resource indicator corresponding to an optimal beam to the network device, to complete optimal beam selection.

3. Precoding matrix indicator (precoding matrix indicator, PMI): The network device may select, based on the PMI, a precoding matrix for precoding data.

4. Rank indication (rank indication, RI): The rank indication indicates a quantity of layers of data that the network device can schedule the terminal device to simultaneously transmit. A larger RI indicates a larger quantity of layers of data for simultaneous transmission. On the contrary, a smaller RI indicates a smaller quantity of layers of data for simultaneous transmission.

5. Channel quality indicator (channel quality indicator, CQI): The channel quality indicator provides a reference for the network device to determine a coding and modulation scheme. The terminal device feeds back downlink channel quality of the terminal device to the network device based on the CQI. The network device determines, based on a CQI feedback from the terminal device, a modulation and coding scheme to be used by the terminal device for downlink transmission.

6. Uplink control information (uplink control information, UCI): The uplink control information is uplink control information, and may be transmitted through a physical uplink shared channel (physical uplink shared channel, PUSCH) and a physical uplink control channel (physical uplink control channel, PUCCH). The UCI includes the following three types of information: a positive acknowledgment (acknowledgment, ACK)/negative acknowledgment (negative acknowledgment, NACK), a CSI report, and an uplink scheduling request (scheduling request, SR). The CSI report is for feeding back a CSI-RS measurement result, and may include a CRI, an RI, a PMI, a CQI, and the like.

7. Part 1 CSI report (part 1 CSI report): The part 1 CSI report is a CSI report including only wideband CSI, or a part 1 CSI report including the wideband CSI and subband CSI.

8. Resource set (resource set): The resource set is a set in which several configured CSI-RSs are referenced.

9. Port (port): The port may be referred to as an antenna port. One port may be associated with one or more transmit channels. When one port is associated with a plurality of transmit channels, after being weighted, a signal on the port is transmitted through the plurality of transmit channels associated with the port. One reference signal may be transmitted through one or more ports. Time-frequency resources corresponding to different ports are the same or different. A reference signal transmitted by a transmit end through a port may be received by a receive end, and is for estimating a feature of a radio channel from the port to the receive end.

10. Port shutdown (or may be referred to as antenna port shutdown): With development of communication technologies, a spectrum used by a communication apparatus is increasingly wide, a quantity of transmit antennas configured by the network device is increasingly large, and overall power consumption of the network device is increasingly high. To reduce the power consumption of the network device, the network device may dynamically shut down all or a part of the transmit antennas. In this application, this manner for reducing the power consumption of the network device is referred to as port shutdown for short. Shutdown types may include type (type) 1 shutdown and type (type) 2 shutdown. For example, a quantity of ports used by the network device before the type 1 shutdown is different from a total quantity of ports used after the type 1 shutdown. For another example, a quantity of ports used by the network device before the type 2 shutdown is the same as a total quantity of ports used after the type 2 shutdown, but a direction and a width of a beam of the network device change. Generally, before a port of the network device is shut down, the terminal device may measure a reference signal from the network device on a first resource. After the port of the network device is shut down, the terminal device may measure the reference signal from the network device on a second resource. Because the first resource is different from the second resource, measurement results of the terminal device may also be different. It should be noted that embodiments of this application are not only applicable to a type 1 shutdown scenario, but also applicable to a type 2 shutdown scenario.

When the terminal device reports a plurality of CSI reports to the network device, how to reduce reporting overheads of the plurality of CSI reports is a technical problem to be urgently resolved currently. Therefore, this application provides a communication method, to reduce CSI reporting overheads.

For ease of description, the following uses interaction between a network device and a terminal device as an example for description. It may be understood that the method performed by the network device may alternatively be performed by a module (for example, a chip) in the network device, and the method performed by the terminal device may be alternatively performed by a module (for example, a chip) in the terminal device.

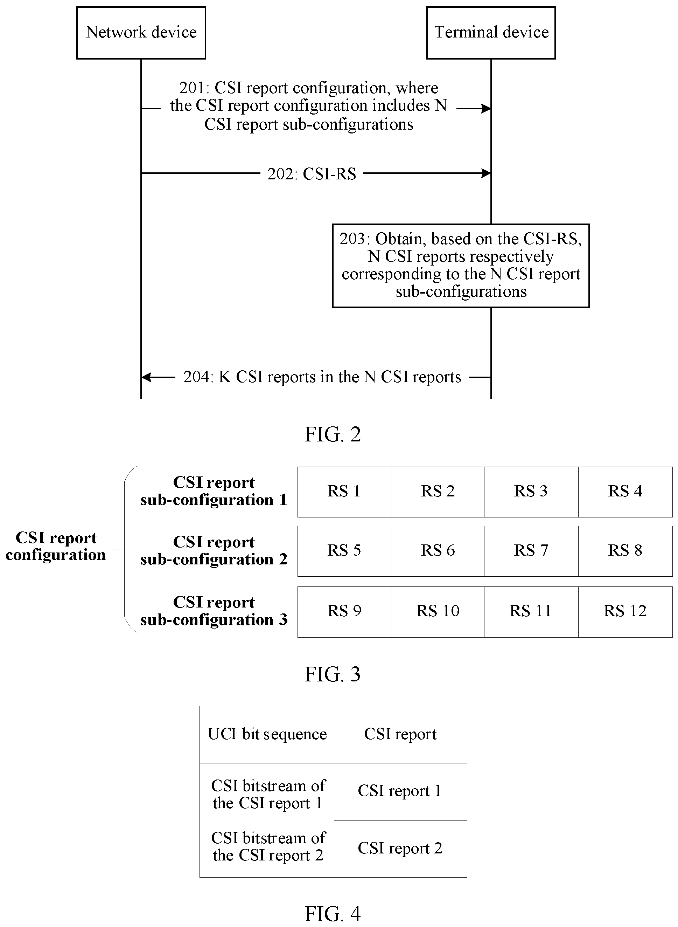

FIG. 2 is a schematic flowchart of a communication method according to an embodiment of this application.

Step 201: A network device sends a CSI report configuration (CSI report configuration) to a terminal device.

Correspondingly, the terminal device receives the CSI report configuration from the network device.

The CSI report configuration includes N CSI report sub-configurations (CSI report sub-configuration), and the N CSI report sub-configurations may indicate M CSI-RS resources. For example, each CSI report sub-configuration includes identifiers of one or more CSI-RS resources, and each CSI report sub-configuration indicates a CSI-RS resource based on an identifier of the CSI-RS resource. Optionally, when a same CSI report sub-configuration indicates a plurality of CSI-RS resources, the plurality of CSI-RS resources may correspond to different beam (beam) directions.

FIG. 3 is a diagram of a CSI report configuration according to an example of this application. The CSI report configuration includes three CSI report sub-configurations, which may be respectively denoted as a CSI report sub-configuration 1, a CSI report sub-configuration 2, and a CSI report sub-configuration 3. Further, the CSI report sub-configuration 1 includes an RS 1 to an RS 4, and the RS 1 to the RS 4 are identifiers of a resource 1 to a resource 4 respectively; the CSI report sub-configuration 2 includes an RS 5 to an RS 8, and the RS 5 to the RS 8 are identifiers of a resource 5 to a resource 8 respectively; and the CSI report sub-configuration 3 includes an RS 9 to an RS 12, and the RS 9 to the RS 12 are identifiers of a resource 9 to a resource 12 respectively. In this example, N is equal to 3, and M is equal to 12.

Optionally, the CSI report configuration further includes one or more pieces of association information, and the association information may indicate that a plurality of CSI-RS resources in the M CSI-RS resources are associated. For example, one piece of association information may indicate that a group of CSI-RS resources in the M CSI-RS resources are associated. In other words, each group of CSI-RS resources includes N associated CSI-RS resources, and the N CSI-RS resources included in each group of CSI-RS resources belong to the CSI-RS resources indicated by the N CSI report sub-configurations.

With reference to the example provided in FIG. 3, the CSI report configuration includes the CSI report sub-configuration 1, the CSI report sub-configuration 2, and the CSI report sub-configuration 3. The CSI report configuration further includes association information 1 and association information 2. The association information 1 indicates that the CSI-RS resource 1, the CSI-RS resource 5, and the CSI-RS resource 9 are associated. The CSI-RS resource 1, the CSI-RS resource 5, and the CSI-RS resource 9 belong to CSI-RS resources indicated by the CSI report sub-configuration 1, the CSI report sub-configuration 2, and the CSI report sub-configuration 3. For example, the association information 1 includes the identifiers of the CSI-RS resource 1, the CSI-RS resource 5, and the CSI-RS resource 9, which are respectively the RS 1, the RS 5, and the RS 9.

Similarly, the association information 2 includes the RS 2, the RS 6, and the RS 10, to indicate that the CSI-RS resource 2, the CSI-RS resource 6, and the CSI-RS resource 10 are associated. The CSI-RS resource 2, the CSI-RS resource 6, and the CSI-RS resource 10 belong to the CSI-RS resources indicated by the CSI report sub-configuration 1, the CSI report sub-configuration 2, and the CSI report sub-configuration 3.

It should be added that, in the N CSI report sub-configurations, a CSI-RS resource indicated by a CSI report sub-configuration is associated with none of CSI-RS resources indicated by all other CSI report sub-configurations. For example, when none of association information in the CSI report configuration includes an identifier of a CSI-RS resource, the CSI-RS resource is not associated with any other CSI-RS resource. With reference to the example provided in FIG. 3, the CSI-RS resource 12 may not be associated with any other CSI-RS resource. It is clear that, in the N CSI report sub-configurations, N1 CSI-RS resources respectively indicated by N1 CSI report sub-configurations are further associated, where N1 is less than N. With reference to the example provided in FIG. 3, the CSI report configuration further includes association information 3, and the association information 3 indicates that the CSI-RS resource 4 is associated with the CSI-RS resource 8. For example, the association information 1 includes the identifiers of the CSI-RS resource 4 and the CSI-RS resource 8, which are respectively the RS 4 and the RS 8.

In another example, the CSI report configuration is specifically a list (list). In the list, the identifiers of the CSI-RS resources included in each CSI report sub-configuration are located in a same row. Correspondingly, the N CSI report sub-configurations correspond to N rows. The association information may indicate that CSI-RS resources indicated by identifiers of CSI-RS resources in each column in the list are associated. Alternatively, the association information indicates that an $i^{th}$ CSI-RS resource indicated by each CSI report sub-configuration is related to an $i^{th}$ CSI-RS resource indicated by any other CSI report sub-configuration, where i is a positive integer. With reference to the list shown in FIG. 3, the resource 1, the resource 5, and the resource 9 are associated; the resource 2, the resource 6, and the resource 10 are associated; the resource 3, the resource 7, and the resource 11 are associated; and the resource 4, the resource 8, and the resource 12 are associated.

In this application, an example in which two CSI-RS resources are associated is used to describe in detail the association of the CSI-RS resources mentioned in this application. A CSI-RS resource A is associated with a CSI-RS resource B. Specifically, the CSI-RS resource A corresponds to L ports, the CSI-RS resource B corresponds to P ports, and the L ports include the P ports. In other words, the L ports corresponding to the CSI-RS resource A include the P ports corresponding to the CSI-RS resource B. Both P and L are positive integers, and P is less than L. Alternatively, the two CSI-RS resources are the same, but correspond to two different power offset (power control offset) values in the same resource. Alternatively, the two CSI-RS resources correspond to a same beam direction.

Optionally, the CSI report configuration further includes a reporting type (for example, periodic reporting or aperiodic reporting), a reporting amount (for example, an RI, a PMI, a CRI, or a CQI), and the like.

Optionally, the network device further sends a CSI resource configuration (CSI resource configuration) to the terminal device. The CSI resource configuration is associated with the CSI report configuration. The CSI resource configuration is for configuring related information of a CSI-RS resource, for example, a time-frequency resource, an antenna port, a power resource, and a scrambling code. For example, the CSI resource configuration is for configuring a resource set (resource set). The resource set includes the M CSI-RS resources. Alternatively, it is understood as that one or more CSI-RS resources indicated by each CSI report sub-configuration are a part of the resource set.

For example, the CSI resource configuration and the CSI report configuration may be carried in a radio resource control (radio resource control, RRC) configuration (configuration) message or an RRC re-configuration (re-configuration) message. For example, the CSI resource configuration and the CSI report configuration may be carried in one message, or may be carried in different messages.

Step 202: The network device sends a CSI-RS on the M CSI-RS resources. Correspondingly, the terminal device receives the CSI-RS on one or more of the M CSI-RS resources.

For the terminal device, the terminal device may receive the CSI-RS on the M CSI-RS resources, or may receive the CSI-RS on a part of the M CSI-RS resources.

When receiving the CSI-RS on a part of the M CSI-RS resources, specifically, when receiving the CSI-RS on one or more CSI-RS resources indicated by a CSI report sub-configuration, the terminal device selects, from the one or more CSI-RS resources, a CSI-RS resource with an optimal beam. The terminal device may determine, from one or more CSI-RSs indicated by another CSI report sub-configuration, a CSI-RS resource related to the CSI-RS resource with an optimal beam based on association information in the CSI resource configuration, so that the terminal device can receive the CSI-RS on the selected CSI-RS resource, and does not need to receive the CSI-RS on another CSI-RS resource indicated by the another CSI report sub-configuration. This helps further implement energy saving of the terminal device.

With reference to the example in FIG. 3, when measuring the four CSI-RS resources indicated by the CSI report sub-configuration 1, the terminal device determines that the resource 1 is a CSI-RS resource with an optimal beam. Further, the terminal device determines that the resource 1 is separately related to the resource 5 indicated by the CSI report sub-configuration 2 and the resource 9 indicated by the CSI report sub-configuration 3. Therefore, the terminal device may receive the CSI-RS on the resource 5, and does not need to receive the CSI-RS on the resource 6 to the resource 8. In addition, the terminal device receives the CSI-RS on the resource 9, and does not need to receive the CSI-RS on the resource 10 to the resource 12.

Step 203: The terminal device obtains, based on the CSI-RS, N CSI reports respectively corresponding to the N CSI report sub-configurations.

In a possible implementation, for each of the N CSI report sub-configurations, the terminal receives, based on the CSI report sub-configuration, a CSI-RS on a CSI-RS resource indicated by the CSI report sub-configuration, and generates a CSI report corresponding to the CSI report sub-configuration. In other words, the terminal device may generate the N CSI reports respectively corresponding to the N CSI report sub-configurations.

Depending on whether the M CSI-RS resources include a plurality of associated CSI-RSs, the following describes Case 1 and Case 2.

Case 1: The M CSI-RS resources include a plurality of associated CSI-RS resources.

In an example 1, when generating the N CSI reports, the terminal device may include first information in one of the N CSI reports, and does not include the first information in other CSI reports, to reduce a total quantity of bits for reporting the CSI report. In this embodiment of this application, the CSI report carrying the first information is referred to as a first CSI report, and the other CSI reports in the N CSI reports are referred to as second CSI reports. In other words, there may be N-1 second CSI reports. A CSI report sub-configuration for generating the first CSI report is referred to as a first CSI report sub-configuration. A CSI-RS resource corresponding to an optimal beam is referred to as a first CSI-RS resource.

The first information is associated with the N CSI reports, or the N CSI reports share the first information. For example, the first information includes a CRI, or the first information includes the CRI and a PMI. The CRI is an identifier of the first CSI-RS resource. The PMI is a precoding matrix indicator obtained based on the first CSI-RS resource. Because the first CSI-RS is related to a plurality of CSI-RS resources, the first information may further indicate the first CSI-RS resource and the CSI-RS resources related to the first CSI-RS resource. Optionally, each CSI report may further carry an RI and a CQI.

For example, that the terminal device selects the first CSI-RS resource from one or more CSI-RS resources indicated by the first CSI report sub-configuration may be specifically that the terminal device receives a CSI-RS on the one or more CSI-RS resources indicated by the first CSI report sub-configuration, to obtain signal strength of each CSI-RS, selects a CSI-RS with highest signal strength, and uses the CSI-RS with highest signal strength as a first CSI-RS. The signal strength may be represented by one or more of the following parameters: reference signal received power (reference signal received power, RSRP), received signal strength (received signal strength indication, RSSI), reference signal received quality (reference signal received quality, RSRQ), and a signal to interference plus noise ratio (signal to interference plus noise ratio, SINR).

With reference to the example in FIG. 3, the first CSI report sub-configuration is the CSI report sub-configuration 1. When measuring the four CSI-RS resources indicated by the CSI report sub-configuration 1, the terminal device determines that the resource 1 is a CSI-RS resource with an optimal beam. Further, the resource 1, the resource 5, and the resource 9 are related. The terminal device may further generate, based on the CSI-RS on the resource 5, a CSI report 2 corresponding to the CSI report sub-configuration 2, and generate, based on the CSI-RS on the resource 9, a CSI report 3 corresponding to the CSI report sub-configuration 3. The terminal device may further determine that the CSI report 1 includes the first information, and neither the CSI report 2 nor the CSI report 3 includes the first information.

Further, when the first information is a CRI, the CSI report 1 carries a CRI 1, a PMI 1, an RI 1, and a CQI 1; the CSI report 2 carries a PMI 2, an RI 2, and a CQI 2; and the CSI report 3 carries a PMI 3, an RI 3, and a CQI 3, where the CRI 1 indicates the resource 1, the resource 5, and the resource 9. When the first information is a CRI and a PMI, the CSI report 1 carries a CRI 1, a PMI 1, an RI 1, and a CQI 1; the CSI report 2 carries an RI 2 and a CQI 2; and the CSI report 3 carries an RI 3 and a CQI 3, where the CRI 1 and the PMI 1 indicate the resource 1, the resource 5, and the resource 9. The CRI 1 is an identifier of the resource 1, and the PMI 1 is a precoding matrix indicator obtained based on the resource 1.

In an example 2, when generating the N CSI reports, the terminal device may separately generate first information, where the first information is associated with the N CSI reports, or the N CSI reports share the first information, to reduce a quantity of bits for reporting the CSI reports.

For a specific implementation of generating the N CSI reports by the terminal device, an explanation of the first information, and the like, refer to the descriptions in the example 1. A difference between the example 2 and the example 1 only lies in whether the first information is carried in the first CSI report or used as a separate field independent of the N CSI reports.

With reference to FIG. 3 and the example 1, the terminal device may determine the CSI report 1, the CSI report 2, the CSI report 3, and the first information. In other words, none of the CSI report 1, the CSI report 2, and the CSI report 3 includes the first information.

Case 2: The M CSI-RS resources do not include a plurality of associated CSI-RS resources.

When respectively generating the N CSI reports based on the N CSI report sub-configurations, the terminal device needs to include first information in each of the N CSI reports. For example, the first information includes a CRI and a PMI. Each CSI report further carries an RI and a CQI.

With reference to the example in FIG. 3, the resource 1, the resource 5, and the resource 9 are unrelated. When generating a CSI report 1 corresponding to the CSI report sub-configuration 1, the terminal device may determine that the resource 1 in the four CSI-RS resources indicated by the CSI report sub-configuration 1 is a CSI-RS resource corresponding to an optimal beam. When generating a CSI report 2 corresponding to the CSI report sub-configuration 2, the terminal device determines that the resource 5 in the four CSI-RS resources indicated by the CSI report sub-configuration 2 is a CSI-RS resource corresponding to an optimal beam. In addition, when generating a CSI report 3 corresponding to the CSI report sub-configuration 3, the terminal device determines that the resource 9 in the four CSI-RS resources indicated by the CSI report sub-configuration 3 is a CSI-RS resource corresponding to an optimal beam. Further, each of the N CSI reports includes the first information. For example, the first information is a CRI and a PMI. The CSI report 1 carries a CRI 1, a PMI 1, an RI 1, and a CQI 1; the CSI report 2 carries a CRI 2, a PMI 2, an RI 2, and a CQI 2; and the CSI report 3 carries a CRI 3, a PMI 3, an RI 3, and a CQI 3.

Step 204: The terminal device reports K CSI reports in the N CSI reports to the network device. Correspondingly, the network device receives the K CSI reports from the terminal device. K is less than or equal to N.

It may be understood that when K is equal to N, the terminal device reports the N CSI reports to the network device. When K is less than N, specifically, the terminal device may select the K CSI reports from the N CSI reports, to report the K CSI reports to the network device.

The following explains and describes a case in which K is less than N.

In a possible manner, in the N CSI reports generated by the terminal device, only the first CSI report carries the first information, and none of other CSI reports carries the first information. In this case, the terminal device sends the first CSI report to the network device, and discards the CSI reports other than the first CSI report in the N CSI reports. Herein, K = 1. Optionally, after receiving the first CSI report from the terminal device, the network device may determine that the first CSI report is a CSI report in the N CSI reports that carries the first information, and none of the other CSI reports carries the first information. Optionally, the network device may further determine that the terminal device discards the other CSI reports that do not carry the first information.

In another possible manner, the terminal device reports the K CSI reports to the network device based on priorities of the N CSI reports. Specifically, the terminal device sorts the N CSI reports in descending order based on the priorities of the N CSI reports, to select first K CSI reports in the sorting, reports the K CSI reports, and discards a CSI report other than the K CSI reports. Optionally, after receiving the K CSI reports from the terminal device, the network device may determine that the K CSI reports are the first K CSI reports in the N CSI reports sorted in descending order of the priorities. Optionally, the network device may further determine that the terminal device discards the CSI report other than the K CSI reports in the N CSI reports.

With reference to Case 1 and Case 2 in step 202, the following describes how the terminal device determines the priorities of the CSI reports by using examples.

Based on the example 1 in Case 1, the following priority sorting example 1 is provided.

The terminal device determines that a priority of a CSI report that includes the first information is higher than a priority of a CSI report that does not include the first information, in other words, determines that a priority of the first CSI report is higher than a priority of the second CSI report.

Further, when there are a plurality of second CSI reports, there are following cases.

In a possible example, the terminal device determines that a priority of a second CSI report generated based on a CSI report sub-configuration with a low index is higher than a priority of a second CSI report generated based on a CSI report sub-configuration with a high index. It may be understood that, when generating the CSI report configuration, the network device may determine that a quantity of ports corresponding to a CSI-RS resource indicated by the CSI report sub-configuration with a low index is greater than or equal to a quantity of ports corresponding to a CSI-RS resource indicated by the CSI report configuration with a high index.

In another possible example, the terminal device determines that a priority of a second CSI report corresponding to a CSI report sub-configuration with a high index is higher than a priority of a second CSI report corresponding to a CSI report sub-configuration with a low index. It may be understood that, when generating the CSI report configuration, the network device may determine that a quantity of ports corresponding to a CSI-RS resource indicated by the CSI report sub-configuration with a high index is greater than or equal to a quantity of ports corresponding to a CSI-RS resource indicated by the CSI report configuration with a low index.

For ease of description, the following uses the previous example as an example.

Based on the example 2 in Case 1 and Case 2, the following priority sorting example 2 is provided.

In a possible example, the terminal device determines that a priority of a CSI report generated based on a CSI report sub-configuration with a low index is higher than a priority of a CSI report generated based on a CSI report sub-configuration with a high index. For example, the N CSI reports include the first CSI report and a second CSI report, the first CSI report corresponds to a first CSI report sub-configuration in the N CSI report sub-configurations, and the second CSI report corresponds to a second CSI report sub-configuration in the N CSI report sub-configurations. When an index of the first CSI report sub-configuration is less than an index of the second CSI report sub-configuration, a priority of the first CSI report is higher than a priority of the second CSI report.

In another possible example, the terminal device determines that a priority of a CSI report generated based on a CSI report sub-configuration with a high index is higher than a priority of a CSI report generated based on a CSI report sub-configuration with a low index. For example, the N CSI reports include the first CSI report and a second CSI report, the first CSI report corresponds to a first CSI report sub-configuration in the N CSI report sub-configurations, and the second CSI report corresponds to a second CSI report sub-configuration in the N CSI report sub-configurations. When an index of the first CSI report sub-configuration is higher than an index of the second CSI report sub-configuration, a priority of the first CSI report is higher than a priority of the second CSI report.

For ease of description, the following uses the previous example as an example. For a relationship between an index of a CSI report sub-configuration and a priority of a CSI report, refer to content in the foregoing priority sorting example 1.

It should be added that, in the foregoing descriptions, the terminal device determines, based on an index of a CSI report sub-configuration, a priority of a CSI report corresponding to the CSI report sub-configuration, and the index of the CSI report sub-configuration may be determined based on a quantity of ports corresponding to a CSI-RS resource indicated by the CSI report sub-configuration. This application further provides another solution. The terminal device determines that, when a CSI report sub-configuration indicates a CSI-RS resource corresponding to a larger quantity of ports, a CSI report generated based on the CSI report sub-configuration has a higher priority. For example, the N CSI reports include the first CSI report and a second CSI report, the first CSI report corresponds to a first CSI report sub-configuration in the N CSI report sub-configurations, and the second CSI report corresponds to a second CSI report sub-configuration in the N CSI report sub-configurations. When a quantity of ports corresponding to a CSI-RS resource indicated by the first CSI report sub-configuration is greater than a quantity of ports corresponding to a CSI-RS resource indicated by the second CSI report sub-configuration, a priority of the first CSI report is higher than a priority of the second CSI report.

In the foregoing technical solution, after generating the N CSI reports, the terminal device sends the K CSI reports in the N CSI reports to the network device, where K is less than N. In this way, a reporting quantity of CSI reports is reduced, and overheads of reporting a plurality of CSI reports by the terminal device are reduced. The K CSI reports may share one piece of first information, and this helps further reduce the overheads of reporting the plurality of CSI reports by the terminal device.

Optionally, before reporting the K CSI reports in the N CSI reports, the terminal device may further determine whether an uplink resource meets a resource requirement for reporting the N CSI reports by the terminal device, and then determine a quantity K of CSI reports to be sent to the network device. The uplink resource herein is an uplink resource for sending a CSI report, and the uplink resource may be scheduled by the network device. When the terminal device determines whether the uplink resource meets the resource requirement for reporting the N CSI reports by the terminal device, there may be specifically the following example a and example b.

In the example a, the terminal device determines a target code rate (code rate) for sending the N CSI reports, and then determines whether the target code rate is greater than a maximum code rate (maxCodeRate). When determining that the target code rate is less than or equal to the maximum code rate, the terminal device determines that the uplink resource meets the resource requirement for reporting the N CSI reports by the terminal device. Alternatively, when determining that the target code rate is greater than the maximum code rate, the terminal device determines that the uplink resource does not meet the resource requirement for reporting the N CSI reports by the terminal device. The target code rate is a ratio of a sum of quantities of bits of the N CSI reports to a quantity of bits that can be carried in the uplink resource. The maximum code rate is preconfigured by the network device for the terminal device. For example, the uplink resource may be specifically a PUCCH resource, and the maximum code rate is a maximum code rate for feeding back UCI by the terminal device on a PUCCH.

In the example b, the terminal device determines whether a quantity of bits that can be carried in the uplink resource is greater than a sum of quantities of bits of the N CSI reports. When the quantity of bits that can be carried in the uplink resource is greater than or equal to the sum of the quantities of bits of the N CSI reports, it is determined that the uplink resource meets the resource requirement for reporting the N CSI reports by the terminal device. When the quantity of bits that can be carried in the uplink resource is less than the sum of the quantities of bits of the N CSI reports, it is determined that the uplink resource does not meet the resource requirement for reporting the N CSI reports by the terminal device.

When the terminal device determines that the uplink resource cannot meet the resource requirement for reporting the N CSI reports by the terminal device, the terminal device selects the K CSI reports from the N CSI reports based on the priorities of the N CSI reports, sends the selected K CSI reports to the network device, and discards remaining K CSI reports in the N CSI reports. For example, when a target code rate of the N CSI reports is greater than a maximum code rate, the terminal device selects the K CSI reports from the N CSI reports based on the priorities of the N CSI reports, and reports the K CSI reports, where a target code rate of the K CSI reports is less than or equal to the maximum code rate. With reference to the example in FIG. 3, the terminal device generates the CSI report 1, the CSI report 2, and the CSI report 3. The three CSI reports are sorted in descending order of priorities: the CSI report 1, the CSI report 2, and the CSI report 3. Further, the terminal device determines that a target code rate of the three CSI reports is greater than the maximum code rate, and determines that a target code rate of two CSI reports is less than or equal to the maximum code rate. Therefore, the terminal device sends the CSI report 1 and the CSI report 2 to the network device, and discards the CSI report 3. Optionally, after the network device receives the K CSI reports, it is determined that the uplink resource scheduled by the network device for the terminal device cannot meet the resource requirement for reporting the N CSI reports by the terminal device.

When determining that the uplink resource can meet the resource requirement for reporting the N CSI reports by the terminal device, the terminal device may send the N CSI reports to the network device, that is, N=K. In addition, this application does not exclude the following solution: Even if the uplink resource can meet the resource requirement for reporting the N CSI reports by the terminal device, to reduce reporting overheads of the plurality of CSI reports, the terminal device still first selects the K CSI reports from the N CSI reports, and then sends the K CSI reports to the network device. Herein, K is less than N.

Optionally, that the terminal device reports the K CSI reports to the network device may be specifically that the terminal device sends UCI to the network device, where the UCI includes the K CSI reports. Optionally, the K CSI reports in the UCI may alternatively be K CSI reports sorted in descending order of the priorities. FIG. 4 is a diagram of a UCI bit sequence (UCI bit sequence) according to an example of this application. The UCI bit sequence includes a CSI bitstream (CSI fields) of a CSI report 1 and a CSI bitstream of a CSI report 2. The CSI bitstream of the CSI report 1 is for carrying the CSI report 1, and the CSI bitstream of the CSI report 2 is for carrying the CSI report 2. The CSI report 1 carries first information, and the CSI report 2 does not carry the first information. A priority of the CSI report 1 is higher than a priority of the CSI report 2.

When UCI is transmitted on a PUCCH and only a CSI part 1 can be transmitted on the PUCCH, a payload (payload) of the UCI is fixed. In this case, to be compatible with different RIs in the UCI, a maximum quantity of bits occupied by the payload of the UCI may be determined. Further, in a plurality of CSI reports carried in the UCI, only a first CSI report carries the first information, and none of one or more second CSI reports carries the first information. Therefore, the maximum quantity of bits occupied by the payload of the UCI may be equal to a maximum quantity of bits originally occupied by the payload of the UCI minus a product of a quantity of second CSI reports and a quantity of bits of the first information. For example, the maximum quantity of bits occupied by the payload of the UCI is originally x, and the quantity of bits of the first information is y. The terminal device generates the CSI report 1, the CSI report 2, and a CSI report 3, where the CSI report 1 carries the first information, and the CSI report 2 and the CSI report 3 do not carry the first information. When the UCI sent by the terminal device includes the CSI report 1, the CSI report 2, and the CSI report 3, the maximum quantity of bits occupied by the payload of the UCI may be equal to x-2y, where both x and y are positive integers.

It should be added that a plurality of CSI reports generated by the terminal device based on one CSI report configuration are denoted as a CSI report set. With reference to the example in FIG. 3, to be specific, the CSI report 1, the CSI report 2, and the CSI report 3 form a CSI report set. Further, the network device may send a plurality of CSI report configurations to the terminal device. Correspondingly, the terminal device may generate CSI report sets respectively corresponding to the plurality of CSI report configurations. Further, the terminal device may perform priority sorting, based on indexes of the plurality of CSI report configurations, the CSI report sets respectively corresponding to the plurality of CSI report configurations.

For example, the terminal device determines that a priority of a CSI report set generated based on a CSI report configuration with a low index is higher than a priority of a CSI report set generated based on a CSI report configuration with a high index. For another example, the terminal device determines that a priority of a CSI report set generated based on a CSI report configuration with a high index is higher than a priority of a CSI report set generated based on a CSI report configuration with a low index. For ease of description, the following uses the previous example as an example. For a relationship between an index of a CSI report configuration and a priority of a CSI report set, refer to content in the foregoing priority sorting example 1. The "CSI report sub-configuration" may be replaced with the "CSI report configuration" for understanding, and the "CSI report" may be replaced with the "CSI report set" for understanding.

In a possible example, the terminal device may first perform priority sorting, based on the indexes of the plurality of CSI report configurations, on the CSI report sets respectively corresponding to the plurality of CSI report configurations, and then perform priority sorting on a plurality of CSI reports in each CSI report set depending on whether the plurality of CSI reports carry the first information and/or based on indexes of CSI report sub-configurations for generating the CSI reports (for a specific implementation, refer to the foregoing priority sorting example 1 and priority sorting example 2).

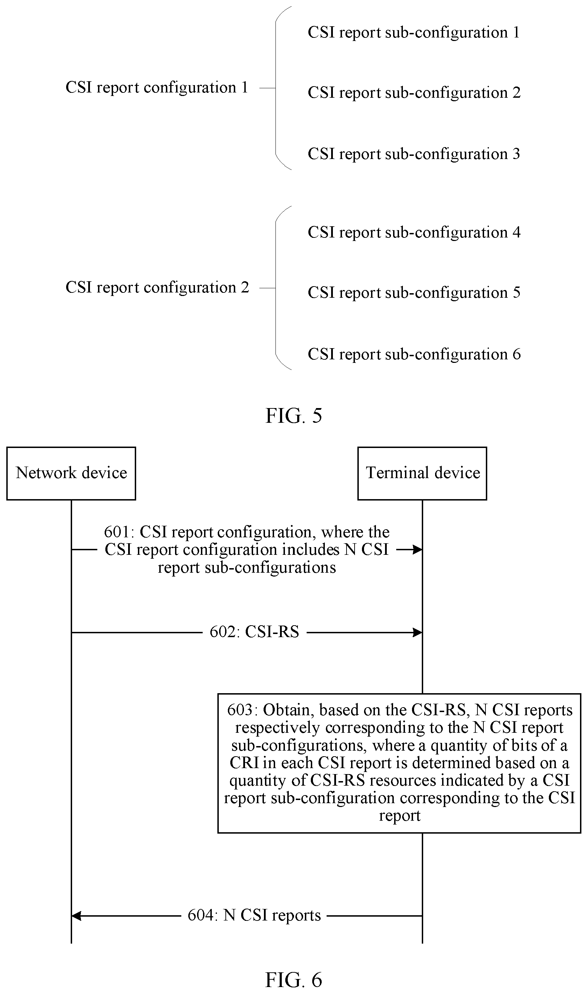

FIG. 5 is a diagram of a plurality of CSI report configurations according to an example of this application. Specifically, a CSI report configuration 1 includes a CSI report sub-configuration 1, a CSI report sub-configuration 2, and a CSI report sub-configuration 3; and a CSI report configuration 2 includes a CSI report sub-configuration 4, a CSI report sub-configuration 5, and a CSI report sub-configuration 6. Correspondingly, the terminal device may generate a CSI report set 1 based on the CSI report configuration 1. The CSI report set 1 includes a CSI report 1, a CSI report 2, and a CSI report 3 respectively corresponding to the CSI report sub-configuration 1, the CSI report sub-configuration 2, and the CSI report sub-configuration 3. The CSI report 1 includes first information, and the CSI report 2 and the CSI report 3 do not include the first information. In addition, the terminal device may generate a CSI report set 2 based on the CSI report configuration 2. The CSI report set 2 includes a CSI report 4, a CSI report 5, and a CSI report 6 respectively corresponding to the CSI report sub-configuration 4, the CSI report sub-configuration 5, and the CSI report sub-configuration 6. The CSI report 4 includes the first information, and the CSI report 5 and the CSI report 6 do not include the first information.

Then, the terminal device may determine that a priority of the CSI report set 1 is higher than that of the CSI report set 2, and determine that priority sorting is performed in the CSI report set 1 in descending order to obtain: the CSI report 1, the CSI report 2, and the CSI report 3, and priority sorting is performed in the CSI report set 2 in descending order to obtain: the CSI report 4, the CSI report 5, and the CSI report 6. In other words, final priority sorting determined by the terminal device is performed in descending order to obtain: the CSI report 1, the CSI report 2, the CSI report 3, the CSI report 4, the CSI report 5, and the CSI report 6.

In another possible example, the terminal device first performs sorting depending on whether the plurality of CSI reports carry the first information, and then performs, based on indexes of CSI report configurations and/or indexes of CSI report sub-configurations corresponding to the plurality of CSI reports, priority sorting on a plurality of CSI reports that cannot be sorted.

Still with reference to the example in FIG. 5, the terminal device may determine that both the CSI report 1 and the CSI report 4 include the first information, and none of the CSI report 2, the CSI report 3, the CSI report 5, and the CSI report 6 includes the first information. Therefore, the terminal device determines that priorities of the CSI report 1 and the CSI report 4 are higher than priorities of the CSI report 2, the CSI report 3, the CSI report 5, and the CSI report 6. Further, the terminal device determines, based on indexes of CSI report sub-configurations respectively corresponding to the CSI report 1 and the CSI report 4, that the priority of the CSI report 1 is higher than the priority of the CSI report 4. In addition, the terminal device determines, based on indexes of CSI report sub-configurations respectively corresponding to the CSI report 2, the CSI report 3, the CSI report 5, and the CSI report 6, that priority sorting is performed in descending order to obtain: the CSI report 2, the CSI report 3, the CSI report 5, and the CSI report 6. In other words, final priority sorting determined by the terminal device is performed in descending order to obtain: the CSI report 1, the CSI report 4, the CSI report 2, the CSI report 3, the CSI report 5, and the CSI report 6.

In addition, in this application, a quantity of bits occupied by a CRI in a reported CSI report may be further reduced, to further reduce CSI reporting overheads.

Based on the foregoing Case 1, the terminal device determines that a quantity of CSI-RS resources included in the first CSI report sub-configuration is M1, and then determines, based on the quantity M1 of CSI-RS resources, a quantity of bits occupied by a CRI in the first CSI report.

For example, the quantity of bits of the CRI in the first CSI report may be determined based on $log_2$M1. For example, the quantity of bits of the CRI in the first CSI report is equal to $\lceil log_2 M1 \rceil$ . With reference to the example in FIG. 3, the first CSI report sub-configuration is the CSI report sub-configuration 1. The terminal device determines that the quantity M1 of CSI-RS resources included in the CSI report sub-configuration 1 is equal to 4, and therefore may determine that the quantity of bits occupied by the CRI in the first CSI report is 2. Further, when determining that the optimal beam corresponds to the resource 1, the terminal device may determine that a value of the CRI may be 00; when determining that the optimal beam corresponds to the resource 2, the terminal device may determine that the value of the CRI may be 01; and so on. Further, when the resource 1, the resource 5, and the resource 9 are related, the value 00 of the CRI further indicates the resource 5 and the resource 9; and when the resource 2, the resource 6, and the resource 10 are related, the value 01 of the CRI further indicates the resource 6 and the resource 10.

Based on the foregoing Case 2, when generating each of the K CSI reports, the terminal device may determine, based on a quantity of CSI-RS resources included in a CSI report sub-configuration for generating the CSI report, a quantity of bits occupied by a CRI in each CSI report.

For example, the K CSI reports include a first CSI report, and a quantity of CSI-RS resources included in a first CSI report sub-configuration is M1. The terminal device may determine, based on the quantity M1 of CSI-RS resources, a quantity of bits occupied by a CRI in the first CSI report. The first CSI report may be any one of the K CSI reports. For example, the quantity of bits of the CRI in the first CSI report may be determined based on $log_2$ M1.

For example, the K CSI reports further include a second CSI report, and a quantity of CSI-RS resources included in a second CSI report sub-configuration is M2. The terminal device may determine, based on the quantity M2 of CSI-RS resources, a quantity of bits occupied by a CRI in the second CSI report. The second CSI report sub-configuration is for generating the second CSI report, and the second CSI report may be any one of the K CSI reports except the first CSI report. For example, the quantity of bits of the CRI in the second CSI report may be determined based on $log_2$M2. For example, the quantity of bits of the CRI in the second CSI report is equal to $\lceil log_2 M2 \rceil$. M2 is a positive integer, and M2 and M1 are the same or different.

With reference to the example in FIG. 3, the first CSI report sub-configuration is the CSI report sub-configuration 1. The terminal device determines that the quantity M1 of CSI-RS resources included in the CSI report sub-configuration 1 is equal to 4, and therefore determines that the quantity of bits occupied by the CRI in the first CSI report is 2. Further, when determining, based on the CSI-RS resources indicated by the CSI report sub-configuration 1, that the optimal beam corresponds to the resource 1, the terminal device determines that a value of the CRI is 00; when determining that the optimal beam corresponds to the resource 2, the terminal device determines that the value of the CRI is 01; and so on. The second CSI report sub-configuration is the CSI report sub-configuration 2. The terminal device determines that the quantity M2 of CSI-RS resources included in the CSI report sub-configuration 2 is equal to 4, and therefore determines that the quantity of bits occupied by the CRI in the second CSI report is 2. Further, when determining, based on the CSI-RS resource indicated by the CSI report sub-configuration 2, that the optimal beam corresponds to the resource 5, the terminal device determines that a value of the CRI is 00; when determining that the optimal beam corresponds to the resource 6, the terminal device determines that the value of the CRI is 01; and so on.

It is clear that the solution of determining the quantity of bits occupied by the UCI may alternatively be used independently, to be specific, when the N CSI report sub-configurations respectively correspond to the N CSI reports, each CSI report carries a CRI, and a quantity of bits of the CRI is determined based on a quantity of CSI-RS resources indicated by a CSI report sub-configuration corresponding to the CSI report. Different CSI report sub-configurations indicate a same quantity or different quantities of CSI-RS resources.

In a possible embodiment, the method shown in FIG. 2 further includes step 205: After receiving the K CSI reports from the terminal device, the network device may perform beam management, resource scheduling, and the like based on the K CSI reports.

FIG. 6 shows another communication method according to an example of this application. The communication method may be used to reduce reporting overheads of a plurality of CSI reports. For ease of description, the following uses interaction between a network device and a terminal device as an example for description. It may be understood that the method performed by the network device may alternatively be performed by a module (for example, a chip) in the network device, and the method performed by the terminal device may be alternatively performed by a module (for example, a chip) in the terminal device.

Step 601: The network device sends a CSI report configuration to the terminal device. Correspondingly, the terminal device receives the CSI report configuration from the network device. The CSI report configuration includes N CSI report sub-configurations.

For content that is not described in detail in step 601, refer to the descriptions in step 201.

Step 602: The network device sends a CSI-RS on M CSI-RS resources. Correspondingly, the terminal device receives the CSI-RS on one or more of the M CSI-RS resources. For content that is not described in detail in step 601, refer to the descriptions in step 202.

Step 603: The terminal device obtains, based on the CSI-RS, N CSI reports respectively corresponding to the N CSI report sub-configurations. A quantity of bits of a CRI in each CSI report is determined based on a quantity of CSI-RS resources indicated by a CSI report sub-configuration corresponding to the CSI report. For content that is not described in detail in step 603, refer to the descriptions in step 203 and the descriptions about determining the CRI after step 204.

Step 604: The terminal device sends the N CSI reports to the network device. Correspondingly, the network device receives the N CSI reports from the terminal device.

In the foregoing technical solution, each of the N CSI reports reported by the terminal device to the network device carries a CRI, and the quantity of bits occupied by the CRI carried in each CSI report is determined by the terminal device based on the quantity of CSI-RS resources indicated by the CSI report sub-configuration for generating the CSI report. In comparison with a solution in which the terminal device determines, based on a quantity of CSI-RS resources indicated by a CSI report configuration, a quantity of bits occupied by a CRI carried in each CSI report, in this application, the quantity of bits occupied by the CRI can be greatly reduced, in other words, a quantity of bits occupied by each CSI report is greatly reduced. This helps reduce the overheads of reporting the plurality of CSI reports by the terminal device.

It may be understood that, to implement functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

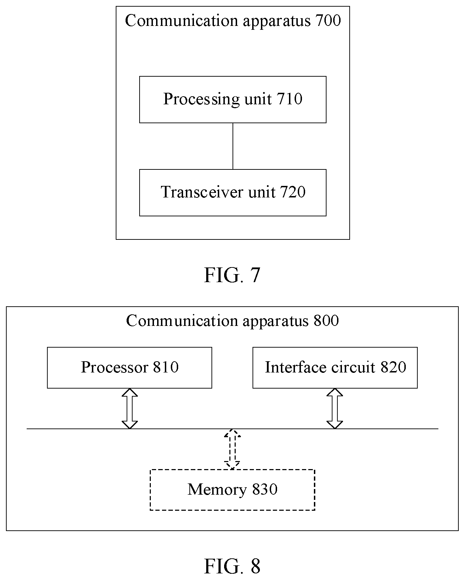

FIG. 7 and FIG. 8 are diagrams of possible structures of communication apparatuses according to embodiments of this application. The communication apparatuses may be configured to implement a function of the terminal device or the network device in the foregoing method embodiments. Therefore, beneficial effects of the foregoing method embodiments can also be implemented.

In embodiments of this application, the communication apparatus may be one of the terminal devices 120a to 120j shown in FIG. 1, or may be the network device 110a or 110b shown in FIG. 1, or may be a module (for example, a chip) used in the terminal device or the network device.

As shown in FIG. 7, the communication apparatus 700 includes a processing unit 710 and a transceiver unit 720. The communication apparatus 700 is configured to implement a function of the terminal device or the network device in the method embodiment shown in FIG. 2 or FIG. 6.

When the communication apparatus 700 is configured to implement the function of the terminal device in the method embodiment shown in FIG. 2 or FIG. 6, the transceiver unit 720 is configured to: receive a CSI report configuration, where the CSI report configuration includes N CSI report sub-configurations, each CSI report sub-configuration indicates one or more CSI-RS resources, and the N CSI report sub-configurations indicate M CSI-RS resources; and receive a CSI-RS on one or more of the M CSI-RS resources; the processing unit 710 is configured to obtain, based on the CSI-RS, N CSI reports respectively corresponding to the N CSI report sub-configurations; and the transceiver unit 720 is further configured to report K CSI reports in the N CSI reports, where N, M, and K are all integers greater than 1, and K is less than or equal to N.

In a possible implementation, the N CSI reports include a first CSI report, the first CSI report is a CSI report in the N CSI reports that includes first information, and the first information includes a CRI, or the first information includes the CRI and a PMI. When reporting the K CSI reports in the N CSI reports, the transceiver unit 720 is specifically configured to: report the first CSI report; and discard a CSI report other than the first CSI report in the N CSI reports.

In a possible implementation, before reporting the K CSI reports in the N CSI reports, the transceiver unit 720 is further configured to: determine a target code rate for sending the N CSI reports; and when the target code rate for the N CSI reports is greater than a maximum code rate, report the K CSI reports in the N CSI reports, where a target code rate for the K CSI reports is less than or equal to the maximum code rate.

When the communication apparatus 700 is configured to implement the function of the network device in the method embodiment shown in FIG. 2 or FIG. 6, the processing unit 710 is configured to generate a CSI report configuration; and the transceiver unit 720 is configured to: send the CSI report configuration, where the CSI report configuration includes N CSI report sub-configurations, each CSI report sub-configuration indicates one or more CSI-RS resources, and the N CSI report sub-configurations indicate M CSI-RS resources; send a CSI-RS on the M CSI-RS resources; and receive K CSI reports, where the K CSI reports belong to N CSI reports, and the N CSI reports are respectively determined based on the N CSI report sub-configurations, where N, M, and K are all integers greater than 1, and K is less than or equal to N.

In a possible implementation, the N CSI reports include a first CSI report, the first CSI report is a CSI report in the N CSI reports that includes first information, a CSI report other than the first CSI report in the N CSI reports does not include the first information, and the first information includes a CRI, or the first information includes the CRI and a PMI. When receiving the K CSI reports, the transceiver unit 720 is specifically configured to receive the first CSI report.

For more detailed descriptions about the processing unit 710 and the transceiver unit 720, directly refer to the related descriptions in the method embodiment shown in FIG. 2 or FIG. 6. Details are not described herein again.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data needed by the processor 810 to run the instructions, or store data generated after the processor 810 runs the instructions.

When the communication apparatus 800 is configured to implement the method shown in FIG. 2 or FIG. 6, the processor 810 is configured to implement a function of the processing unit 710, and the interface circuit 820 is configured to implement a function of the transceiver unit 720.

When the communication apparatus is a chip used in the terminal device, the chip of the terminal device implements a function of the terminal device in the foregoing method embodiments. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is a module used in the network device, the module in the network device implements a function of the network device in the foregoing method embodiments. The module in the network device receives information from another module (for example, a radio frequency module or an antenna) in the network device, where the information is sent by the terminal device to the network device. Alternatively, the module in the network device sends information to another module (for example, a radio frequency module or an antenna) in the network device, where the information is sent by the network device to the terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. It is clear that the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined based on an internal logical relationship thereof to form a new embodiment.

Depending on whether optional is used in this specification: In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A communication method, comprising:

    receiving a channel state information CSI report configuration, wherein the CSI report configuration comprises N CSI report sub-configurations, each CSI report sub-configuration indicates one or more channel state information reference signal CSI-RS resources, and the N CSI report sub-configurations indicate M CSI-RS resources;
    receiving a CSI-RS on one or more of the M CSI-RS resources;
    obtaining, based on the CSI-RS, N CSI reports respectively corresponding to the N CSI report sub-configurations; and
    reporting K CSI reports in the N CSI reports, wherein
    N, M, and K are all integers greater than 1, and K is less than or equal to N.

2.  The method according to claim 1, wherein the K CSI reports comprise a first CSI report;

    the first CSI report is determined based on a first CSI report sub-configuration in the N CSI report sub-configurations, the first CSI report sub-configuration indicates M1 CSI-RS resources, and M1 is an integer greater than 1; and
    the first CSI report comprises a CSI-RS resource indicator CRI, and a quantity of bits of the CRI is determined based on the M1 CSI-RS resources.

3.  The method according to claim 2, wherein the quantity of bits of the CRI is $\lceil log_2 M1 \rceil$.

4.  The method according to any one of claims 1 to 3, wherein the K CSI reports are respectively generated based on K CSI report sub-configurations in the N CSI report sub-configurations, and a quantity of bits of a CRI in each CSI report is determined based on a quantity of CSI-RS resources indicated by a CSI report sub-configuration for generating the CSI report.

5.  The method according to any one of claims 1 to 4, wherein the N CSI reports comprise the first CSI report and a second CSI report, the first CSI report comprises first information, the second CSI report does not comprise the first information, and a priority of the first CSI report is higher than a priority of the second CSI report; and
    the first information comprises the CRI, or the first information comprises the CRI and a precoding matrix indicator PMI.

6.  The method according to any one of claims 1 to 4, wherein the N CSI reports comprise the first CSI report and a second CSI report, the first CSI report corresponds to the first CSI report sub-configuration in the N CSI report sub-configurations, and the second CSI report corresponds to a second CSI report sub-configuration in the N CSI report sub-configurations; and
    when an index of the first CSI report sub-configuration is less than an index of the second CSI report sub-configuration, a priority of the first CSI report is higher than a priority of the second CSI report.

7.  The method according to any one of claims 1 to 4, wherein the N CSI reports comprise the first CSI report and a second CSI report, the first CSI report corresponds to the first CSI report sub-configuration in the N CSI report sub-configurations, and the second CSI report corresponds to a second CSI report sub-configuration in the N CSI report sub-configurations; and
    when a quantity of ports corresponding to a CSI-RS resource indicated by the first CSI report sub-configuration is greater than a quantity of ports corresponding to a CSI-RS resource indicated by the second CSI report sub-configuration, a priority of the first CSI report is higher than a priority of the second CSI report.

8.  The method according to any one of claims 1 to 4, wherein the N CSI reports comprise the first CSI report, the first CSI report is a CSI report in the N CSI reports that comprises first information, and the first information comprises the CRI, or the first information comprises the CRI and a PMI; and

the reporting the K CSI reports in the N CSI reports comprises:

reporting the first CSI report; and
discarding a CSI report other than the first CSI report in the N CSI reports.

9. The method according to any one of claims 1 to 8, wherein

before the reporting the K CSI reports in the N CSI reports, the method further comprises:

determining a target code rate for sending the N CSI reports; and
when the target code rate for the N CSI reports is greater than a maximum code rate, reporting the K CSI reports in the N CSI reports, wherein a target code rate for the K CSI reports is less than or equal to the maximum code rate.

10. The method according to any one of claims 1 to 9, wherein the K CSI reports comprise CRIs, the CRIs indicate N CSI-RS resources, and the N CSI-RS resources are respectively indicated by the N CSI report sub-configurations.

11. A communication method, comprising:

sending a channel state information CSI report configuration, wherein the CSI report configuration comprises N CSI report sub-configurations, each CSI report sub-configuration indicates one or more channel state information reference signal CSI-RS resources, and the N CSI report sub-configurations indicate M CSI-RS resources;
sending a CSI-RS on the M CSI-RS resources; and
receiving K CSI reports, wherein the K CSI reports belong to N CSI reports, and the N CSI reports are respectively determined based on the N CSI report sub-configurations, wherein N, M, and K are all integers greater than 1, and K is less than or equal to N.

12. The method according to claim 11, wherein the K CSI reports comprise a first CSI report;

the first CSI report is determined based on a first CSI report sub-configuration in the N CSI report sub-configurations, the first CSI report sub-configuration indicates M1 CSI-RS resources, and M1 is an integer greater than 1; and
the first CSI report comprises a CSI-RS resource indicator CRI, and a quantity of bits of the CRI is determined based on the M1 CSI-RS resources.

13. The method according to claim 12, wherein the quantity of bits of the CRI is $\lceil log_2 M1 \rceil$..

14. The method according to any one of claims 11 to 13, wherein the K CSI reports are respectively generated based on K CSI report sub-configurations in the N CSI report sub-configurations, and a quantity of bits of a CRI in each CSI report is determined based on a quantity of CSI-RS resources indicated by a CSI report sub-configuration for generating the CSI report.

15. The method according to any one of claims 11 to 14, wherein the N CSI reports comprise the first CSI report and a second CSI report, the first CSI report comprises first information, the second CSI report does not comprise the first information, and a priority of the first CSI report is higher than a priority of the second CSI report; and

the first information comprises the CRI, or the first information comprises the CRI and a precoding matrix indicator PMI.

16. The method according to any one of claims 11 to 14, wherein the N CSI reports comprise the first CSI report and a second CSI report, the first CSI report corresponds to the first CSI report sub-configuration in the N CSI report sub-configurations, and the second CSI report corresponds to a second CSI report sub-configuration in the N CSI report sub-configurations; and

when an index of the first CSI report sub-configuration is less than an index of the second CSI report sub-configuration, a priority of the first CSI report is higher than a priority of the second CSI report.

17. The method according to any one of claims 11 to 14, wherein the N CSI reports comprise the first CSI report and a second CSI report, the first CSI report corresponds to the first CSI report sub-configuration in the N CSI report sub-configurations, and the second CSI report corresponds to a second CSI report sub-configuration in the N CSI report sub-configurations; and

when a quantity of ports corresponding to a CSI-RS resource indicated by the first CSI report sub-configuration is greater than a quantity of ports corresponding to a CSI-RS resource indicated by the second CSI report sub-configuration, a priority of the first CSI report is higher than a priority of the second CSI report.

18. The method according to any one of claims 11 to 14, wherein the N CSI reports comprise the first CSI report, the first CSI report is a CSI report in the N CSI reports that comprises first information, a CSI report other than the first CSI report in the N CSI reports does not comprise the first information, and the first information comprises the CRI, or the first information comprises the CRI and a PMI; and
the receiving the K CSI reports comprises: receiving the first CSI report.

19. The method according to any one of claims 11 to 18, wherein the K CSI reports comprise CRIs, the CRIs indicate N CSI-RS resources, and the N CSI-RS resources are respectively indicated by the N CSI report sub-configurations.

20. A communication apparatus, comprising a module configured to perform the method according to any one of claims 1 to 19.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 19 by using a logic circuit or by executing code instructions.

22. A computer-readable storage medium, wherein the storage medium stores a computer program or instructions, and when the computer program or the instructions are executed by a communication apparatus, the method according to any one of claims 1 to 19 is implemented.

23. A computer program product, wherein the computer program product comprises a computer program or instructions, and when the computer program or the instructions are executed by a communication apparatus, the method according to any one of claims 1 to 19 is implemented.

24. A communication method, comprising:

sending, by a network device, a channel state information CSI report configuration, wherein the CSI report configuration comprises N CSI report sub-configurations, each CSI report sub-configuration indicates one or more channel state information reference signal CSI-RS resources, and the N CSI report sub-configurations indicate M CSI-RS resources;
sending, by the network device, a CSI-RS on the M CSI-RS resources;
receiving, by a terminal device, the CSI report configuration;

receiving, by the terminal device, the CSI-RS on one or more of the M CSI-RS resources;
obtaining, by the terminal device based on the CSI-RS, N CSI reports respectively corresponding to the N CSI report sub-configurations, and reporting K CSI reports in the N CSI reports; and
receiving, by the network device, the K CSI reports, wherein
N, M, and K are all integers greater than 1, and K is less than or equal to N.

FIG. 1

EP 4 750 124 A1

Network device

Terminal device

201: CSI report configuration, where
the CSI report configuration includes N
CSI report sub-configurations

202: CSI-RS

203: Obtain, based on the CSI-RS,
N CSI reports respectively
corresponding to the N CSI report
sub-configurations

204: K CSI reports in the N CSI reports

FIG. 2

| CSI report configuration | CSI report sub-configuration 1 | RS 1 | RS 2 | RS 3 | RS 4 |
|---|---|---|---|---|---|
| | CSI report sub-configuration 2 | RS 5 | RS 6 | RS 7 | RS 8 |
| | CSI report sub-configuration 3 | RS 9 | RS 10 | RS 11 | RS 12 |

FIG. 3

| UCI bit sequence | CSI report |
|---|---|
| CSI bitstream of the CSI report 1 | CSI report 1 |
| CSI bitstream of the CSI report 2 | CSI report 2 |

FIG. 4

CSI report configuration 1 ⎯

CSI report sub-configuration 1

CSI report sub-configuration 2

CSI report sub-configuration 3

CSI report configuration 2 ⎯

CSI report sub-configuration 4

CSI report sub-configuration 5

CSI report sub-configuration 6

FIG. 5

| Network device | | Terminal device |
|---|---|---|

601: CSI report configuration, where the CSI report configuration includes N CSI report sub-configurations →

602: CSI-RS →

603: Obtain, based on the CSI-RS, N CSI reports respectively corresponding to the N CSI report sub-configurations, where a quantity of bits of a CRI in each CSI report is determined based on a quantity of CSI-RS resources indicated by a CSI report sub-configuration corresponding to the CSI report

← 604: N CSI reports

FIG. 6

Communication apparatus 700

Processing unit 710

Transceiver unit 720

FIG. 7

Communication apparatus 800

Processor 810

Interface circuit 820

Memory 830

FIG. 8

# INTERNATIONAL SEARCH REPORT

| International application No. |
| --- |
| **PCT/CN2024/092350** |

| A. | CLASSIFICATION OF SUBJECT MATTER |
| --- | --- |

H04W24/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP, CNKI, IEEE: 信道状态信息, 参考信号, 上报, 报告, 配置, 子配置, 多个, 资源, 共享, 公共, 优先级, 指示, CSI, reference signal, RS, report+, configur+, sub-configur+, multi+, resource, share, common, priority, indicat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117580064 A (TECHNOLOGY INNOVATION CENTER OF CHINA TELECOM CORP., LTD. et al.) 20 February 2024 (2024-02-20) description, paragraphs [0054]-[0140] | 1, 11, 20-24 |
| A | HUAWEI et al. "CSI enhancements for network energy saving" *3GPP TSG-RAN WG1 Meeting #112b-e, R1-2303955*, 19 April 2023 (2023-04-19), sections 2-5 | 1-24 |
| A | CN 114585016 A (VIVO COMMUNICATION TECHNOLOGY CO., LTD.) 03 June 2022 (2022-06-03) entire document | 1-24 |
| A | CN 115334536 A (BEIJING UNISOC COMMUNICATION TECHNOLOGY CO., LTD.) 11 November 2022 (2022-11-11) entire document | 1-24 |
| A | WO 2022206504 A1 (VIVO COMMUNICATION TECHNOLOGY CO., LTD.) 06 October 2022 (2022-10-06) entire document | 1-24 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 July 2024** | **21 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/092350** |

### C.    DOCUMENTS CONSIDERED TO BE RELEVANT

| Category* | Citation of document, with indication, where appropriate, of the relevant passages | Relevant to claim No. |
| --- | --- | --- |
| A | HUAWEI et al. "CSI enhancements for network energy saving" *3GPP TSG-RAN WG1 Meeting #112bis-e, R1-2302337*, 07 April 2023 (2023-04-07), sections 2-4 | 1-24 |
| A | VIVO. "Discussions on techniques in spatial and power domains" *3GPP TSG RAN WG1 #112bis-e, R1-2303910*, 19 April 2023 (2023-04-19), sections 1-3 | 1-24 |

Form PCT/ISA/210 (second sheet) (July 2022)

## INTERNATIONAL SEARCH REPORT
### Information on patent family members

International application No.

**PCT/CN2024/092350**

| Patent document cited in search report | | | Publication date (day/month/year) | Patent family member(s) | | | Publication date (day/month/year) |
|---|---|---|---|---|---|---|---|
| CN | 117580064 | A | 20 February 2024 | None | | | |
| CN | 114585016 | A | 03 June 2022 | None | | | |
| CN | 115334536 | A | 11 November 2022 | None | | | |
| WO | 2022206504 | A1 | 06 October 2022 | CN | 115150025 | A | 04 October 2022 |
| | | | | US | 2024030985 | A1 | 25 January 2024 |
| | | | | EP | 4318997 | A1 | 07 February 2024 |
| | | | | CN | 115150025 | B | 09 February 2024 |
| | | | | JP | 2024513019 | A | 21 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311010524